# EUROPÄISCHE PATENTSCHRIFT

(11) **EP 0 440 861 B1**
(45) Veröffentlichungstag und Bekanntmachung des Hinweises auf die Patenterteilung: **09.06.1993**
(21) Anmeldenummer: 90102497.6
(22) Anmeldetag: 08.02.1990
(51) Int. Cl.: B65G 13/06

(54) **Antriebsrolleneinheit**
Drive roller unit
Unité d'entraînement par rouleau

(43) Veröffentlichungstag der Anmeldung: 14.08.1991
(73) Patentinhaber: BAVARIA CARGO TECHNOLOGIE GMBH, D-80999 München (DE)
(72) Erfinder: Huber, Thomas, D-8127 Iffeldorf (DE)
(74) Vertreter: Bohnenberger, Johannes, Dr.

(56) Entgegenhaltungen:
- EP-A- 0 149 658
- DE-A- 3 724 126
- DE-C- 371 784
- PATENT ABSTRACTS OF JAPAN, Band 10, Nr. 25 (M-450)[2082], 31. Januar 1986; & JP-A-60 183 412 (SHIMAZU SEISAKUSHO K.K.) 18-09-1985

## Beschreibung

Die Erfindung betrifft eine Antriebsrolleneinheit zum Antrieb von Gegenständen auf einer Förderbahn, mit einer von einer Elektromotoranordnung drehend antreibbaren Antriebsrolle, welche mittels einer Führungseinrichtung bezüglich einer Basis zwischen einer unteren Ruhestellung und einer oberen Antriebsstellung, in der sie mit der Unterseite des anzutreibenden Gegenstands im Eingriff steht, bewegbar ist, wobei die Antriebsrolle im wesentlichen als hohler Kreiszylinder ausgebildet ist, in dessen Innenraum die Elektromotoranordnung angeordnet ist, und wobei der Rotor drehbar innerhalb des Stators der Elektromotoranordnung gelagert ist.

Eine Antriebsrolleneinheit der vorstehend genannten Art ist bereits aus der DE-A-37 24 126 bekannt. Bei dieser Antriebsrolleneinheit ist der die Feldwicklung enthaltende Stator der Elektromotoranordnung starr und drehfest mit einem Statorgehäuse verbunden, das als Führungskörper dient, dessen kreiszylindrische Außenumfangsfläche exzentrisch zur Drehachse eines Antriebszahnrades angeordnet ist. Bei dieser Ausgestaltung verharrt beim Einschalten der Motoranordnung der im Inneren des Stators angeordnete Rotor wegen seiner Eigenträgheit und wegen eines ihn abbremsenden Untersetzungsgetriebes und einer besonderen Bremse zunächst im Stillstand, so daß das Motordrehmoment die Statoranordnung und damit den durch ihr Gehäuse gebildeten Führungskörper um die bezüglich der Basis ortsfeste Drehachse des mit der Innenverzahnung der Antriebsrolle kämmenden Antriebszahnrades dreht. Dadurch wird wegen der zur Drehachse des Antriebszahnrades exzentrischen Ausbildung des Führungskörpers die darauf gelagerte Antriebsrolle aus ihrer unteren Ruhestellung in die obere Arbeitsstellung bewegt, in der sie zur Anlage am Boden des darüber befindlichen zu fördernden Gegenstands gelangt.

Eine weitere Antriebsrolleneinheit ist aus der US-A-3 698 539 bekannt. Diese bekannte Einheit weist einen am Boden des Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung, mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollenförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsmoment des Motors zwangsläufig über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichts des Frachtbehälters wird dadurch die Bewegung der Nockensteuereinheit blockiert und die Antriebsrolle wird gegen den Behälterboden gedrückt. Dadurch aber wird auch der die Nockensteuereinheit treibende Ausgang des Planetengetriebes blockiert, so daß der die Antriebsrolle antreibende andere Ausgang des Planetengetriebes an die Antriebsrolle ein Bremsmoment überträgt, das das Bremsdrehmoment der Rutschkupplung überwindet, so daß die an dem Behälterboden angedrückte Antriebsrolle sich zu drehen beginnt und der Behälter in einer von der Drehrichtung des Antriebsmotors abhängigen Richtung vorwärts bewegt wird.

Problematisch ist dabei in der Praxis, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teilen enthält. Dadurch ergeben sich nicht nur bei der Herstellung hohe Kosten, sondern auch ein gerade im Flugzeugbau unerwünschtes hohes Gewicht und eine große Bauform. Zudem führt die große Anzahl von zueinander bewegten Teilen zu Verschleißanfälligkeit und es sind kurze Wartungsintervalle erforderlich, um die im Flugzeugbetrieb geforderte hohe Zuverlässigkeit zu gewährleisten.

Vor allem liegen bei dieser bekannten Antriebsrolleneinheit die einzelnen Bauteile mehr oder weniger ungeschützt nebeneinander, so daß im Betrieb nicht nur mit Verschmutzung und dadurch hervorgerufenen Betriebsstörungen zu rechnen ist, sondern auch mit Beschädigungen durch eingedrungene Gegenstände oder durch direkte Krafteinwirkung.

Eine von Aufbau und Betriebsweise ähnliche Antriebsrolleneinheit ist ferner aus EP-B1-0 149 658 bekannt, bei der neben großer Bauform ebenfalls im Betrieb Probleme durch eindringende Fremdkörper oder durch Gewalteinwirkung auftreten können.

Die der Erfindung zugrundeliegende Aufgabe besteht somit darin, eine Antriebsrolleneinheit der eingangs genannten Gattung zu schaffen, deren Zuverlässigkeit verbessert und deren konstruktiver Aufbau vereinfacht sind.

Gemäß der Erfindung wird diese Aufgabe bei einer Antriebsrolleneinheit der eingangs genannten Gattung dadurch gelöst, daß die Antriebsrolle konzentrisch zur Drehachse des Rotors starr und drehfest mit dem Stator verbunden ist, daß an wenigstens einem axialen Ende der Rotorwelle des Rotors starr und drehfest ein Laufrad angebracht ist, und daß das Laufrad im Eingriff mit einer fest mit der Basis verbundenen, bezüglich der Basis aufwärts führenden Führungsbahn steht, die zusammen mit dem Laufrad die Führungseinrichtung bildet, wobei sich das Laufrad bei der Bewegung der Antriebsrolle von der unteren Ruhestellung in die obere Antriebsstellung auf der Führungsbahn abwälzt.

Bei dieser erfindungsgemäßen Ausgestaltung sind die benötigten Einzelteile der Rollenantriebseinheit gegenüber dem Stand der Technik in ihrer Zahl erheblich reduziert, so daß sich nicht nur ein einfacher, robuster und wartungsarmer Aufbau ergibt, sondern auch ein geringes Gewicht erzielt wird.

Überdies ist es bei dieser erfindungsgemäßen Ausgestaltung möglich, den Rotor und den Stator der Elektromotoranordnung konzentrisch zueinander und konzentrisch zur Antriebsrolle anzuordnen. Dadurch ergibt sich eine besonders gute Raumausnutzung im Inneren der hohlzylindrischen Antriebsrolle, so daß bei vorgegebenen Außenabmessungen der Antriebsrolleneinheit ein besonders großer und damit auch sehr leistungsstarker Elektromotor untergebracht werden kann.

An dieser Stelle muß angemerkt werden, daß die für die Elektromotoranordnung verwendeten Begriffe "Rotor" und "Stator" ihrem strengen Wortsinn nach nicht ganz richtig sind, denn wie nachstehend erläutert werden wird, drehen sich im Betrieb sowohl der "Stator" als auch der "Rotor". Es handelt sich bei diesen Teilen um die beiden Motorelemente, die jeder Elektromotor notwendigerweise aufweisen muß, nämlich die beiden Motorelemente, zwischen denen im Betrieb das Drehmoment der Elektromotoranordnung wirkt. Da herkömmlicherweise bei üblichen Elektromotoren meistens der "Rotor" konzentrisch innerhalb des Stators gelagert ist, wurde in der vorliegenden Beschreibung und den Patentansprüchen diese Bezeichnung für das innenliegende Motorelement der Elektromotoranordnung gewählt, wobei es im Rahmen der erfindungsgemäßen Ausgestaltung durchaus zweckmäßig sein kann, daß der innenliegende "Rotor" dasjenige Motorelement ist, das im Betrieb zur Erzeugung eines elektromagnetischen Feldes mit Strom von außen versorgt werden muß. Wie sich aus der nachfolgenden Funktionsbeschreibung ergibt, ist tatsächlich das außenliegende Motorelement, das als "Stator" bezeichnet wird, dasjenige Motorelement, das im Förderbetrieb der Antriebsrolleneinheit zusammen mit der Antriebsrolle eine Rotationsbewegung ausübt, während das innenliegende Motorelement eine Drehbewegung nur anfänglich beim Hochfahren der Antriebsrolle aus der Ruhestellung in die obere Antriebsstellung ausübt.

Wenn die erfindungsgemäße Antriebsrolleneinheit anfänglich eingeschaltet wird, verharren die Antriebsrolle und der damit drehfest verbundene Stator wegen ihrer Eigenträgheit, oder weil sie wie nachstehend erläutert, abgebremst werden, zunächst im Stillstand. Wegen des in der Elektromotoranordnung wirkenden Drehmoments zwischen dem Rotor und dem Stator beginnt daher der innenliegende Rotor sich zu drehen, wodurch auch das mit der Rotorwelle starr und drehfest verbundene Laufrad in Drehung versetzt wird. Dieses Laufrad steht im Eingriff mit einer Führungsbahn auf der es sich aufgrund dieser Drehbewegung abzuwälzen beginnt. Da die Führungsbahn bezüglich der Basis nach oben führt, wird auch das Führungsrad bezüglich der Basis angehoben. Bei dieser Hebebewegung nimmt das Führungsrad über die Rotorwelle und die Elektromotoranordnung die Antriebsrolle mit nach oben, so daß sie sich aus ihrer unteren Ruhestellung in ihre obere Antriebsstellung bewegt, in der sie gegen die Unterseite eines zu fördernden Gegenstands angepreßt wird. Wegen des Gewichts des zu fördernden Gegenstands wird nun diese Bewegung der Antriebsrolle nach oben blockiert, so daß auch die Abwälzbewegung des Laufrades auf der Führungsbahn gestoppt wird und dadurch der Rotor zum Stillstand kommen muß. Wegen des weiterhin in der Elektromotoranordnung zwischen dem Rotor und dem Stator wirkenden Drehmoments wird nun die Eigenträgheit oder die Abbremsung der Antriebsrolle und des damit verbundenen Stators überwunden, so daß sich die Antriebsrolle in eine Drehbewegung versetzt.

Diese Drehung der Antriebsrolle, die gegen die Unterseite des zu fördernden Gegenstands angepreßt ist, übt eine Tangentialkraft auf den zu fördernden Gegenstand aus, so daß sich dieser, wie gewünscht, entlang der Förderbahn in Bewegung versetzt.

Normalerweise liegt bei der erfindungsgemäßen Antriebsrolleneinheit der anzutreibende Gegenstand, beispielsweise der Frachtcontainer, auf der in Ruhestellung befindlichen Antriebsrolle auf und hält diese mit einem durch das Gewicht des Gegenstands bestimmten Bremsmoment fest. Die Antriebsrolle wird daher beim Einschalten gegen Drehung abgebremst, so daß die vorstehend erläuterte Hebebewegung der Antriebsrolle aus der unteren Ruhestellung in die obere Antriebsstellung einsetzt. Da in dem beschriebenen Fall der Gegenstand bereits auf der Antriebsrolle aufliegt und ein entsprechendes Gewicht hat, ist diese Hebebewegung nur durch die Elastizität der Teile des Gegenstands oder der Antriebsrolle möglich, so daß die Rolle eine nur ganz geringfügige Hebebewegung ausführt, aber dabei fest gegen den Boden des zu fördernden Gegenstands angepreßt wird.

Falls es erwünscht ist, daß die Hebebewegung der Antriebsrolle beim Einschalten aus der Ruhestellung heraus auch ohne aufliegenden, zu fördernden Gegenstand erfolgt, kann vorgesehen sein, daß die Antriebsrolle gegenüber der Basis zusätzlich zu ihrer Eigenträgheit durch geeignete Vorkehrungen abgebremst wird, um die anfängliche Hebebewegung auszulösen.

Bei einer bevorzugten Ausführungsform ist vorgesehen, daß die Führungsbahn als starr und drehfest mit der Basis verbundenes Führungsrad ausgebildet ist, auf dem sich das Laufrad abwälzt, daß dieses Führungsrad und das Laufrad durch ein Lagergehäuse im Eingriff miteinander gehalten sind, und daß das Lagergehäuse um eine zum Führungsrad konzentrische Drehachse bezüglich der Basis drehbar gelagert ist.

Bei dieser Ausführungsform können das Führungsrad und das Laufrad beispielsweise reibschlüssig miteinander im Eingriff stehen, so daß sich beim Einschalten der Anordnung das Laufrad auf dem Führungsrad bezüglich der Basis nach oben abwälzt und dabei die Antriebsrolle in die obere Antriebsstellung bringt. Vorteilhaft ist dabei, daß die als Führungsrad ausgebildete Führungsbahn leicht herstellbar ist.

Besonders einfach gestaltet sich die vorstehend erläuterte Ausführungsform, wenn man vorsieht, daß das Lagergehäuse auf der Rotorwelle und auf einem fest mit der Basis verbundenen, das Führungsrad tragenden Lagerzapfen drehbar gelagert ist. Auf diese Weise wird in konstruktiv einfacher Form sichergestellt, daß der Eingriff des Führungsrades mit dem Laufrad während der anfänglichen Hebebewegung aus der Ruhestellung in die Antriebsstellung aufrechterhalten wird und auch während des Antriebs-Betriebs der Antriebsrolle in ihrer oberen Antriebsstellung durch den Eingriff des Führungsrades mit dem Laufrad gewährleistet ist, daß die Antriebsrolle fest gegen den Boden des zu fördernden Gegenstands angepreßt wird.

Vorteilhafterweise kann vorgesehen sein, daß an beiden axialen Enden der Rotorwelle ein sich auf einer zugeordneten Führungsbahn abwälzendes Laufrad angebracht ist. Durch diese Ausbildung werden vom anzutreibenden Gegenstand und dessen Unregelmäßigkeiten möglicherweise ausgelöste Kippmomente besonders gut aufgefangen.

Bei einer konstruktiv vereinfachten Ausführungsform sieht man vor, daß nur an einem axialen Ende der Rotorwelle ein Laufrad angebracht ist, und daß das Lagergehäuse an dem entgegengesetzten axialen Ende der Rotorwelle einerseits auf diesem Ende der Rotorwelle und andererseits auf einem fest mit der Basis verbundenen, zum Lagerzapfen des Führungsrads konzentrischen Lageransatz drehbar gelagert ist. Auch bei dieser Ausführungsform werden Kippmomente durch den Lageransatz gut aufgefangen.

Vorteilhafterweise sieht man dabei vor, daß das auf den beiden Enden der Rotorwelle gelagerte Lagergehäuse einstückig oder aus fest miteinander verbundenen Teilen aufgebaut ist, so daß ungleichmäßige Belastungen an den entgegengesetzten axialen Enden der Antriebsrolle nicht zu einer Verkantung ihrer Drehachse führen können.

Bei einer abgewandelten Ausführungsform sieht man vor, daß an beiden axialen Enden der Rotorwelle ein sich auf einer zugeordneten Führungsbahn abwälzendes Laufrad angebracht ist, und daß die Führungsbahn als etwa V-förmige oder U-förmige Laufbahn ausgebildet ist, die in einer Ausnehmung der Basis geformt oder fest an der Basis angebracht ist.

Diese Ausführungsform zeichnet sich durch besonders einfachen Aufbau mit einer minimalen Anzahl von Teilen aus.

Die in einer Ausnehmung der Basis oder in einem fest mit der Basis verbindbaren Teil geformte Führungsbahn kann dabei in ihrer Form und in ihrer nach oben weisenden Neigung speziellen Anforderungen an die Hebebewegung der Antriebsrolle aus der Ruhestellung in die Antriebsstellung angepaßt werden. Diese Möglichkeit ergibt sich dadurch, daß sich während der Hebebewegung nach dem Einschalten der Antriebsrolleneinheit das Laufrad aus der unteren Mittelstellung auf der Führungsbahn sich entlang dieser Führungsbahn nach oben wälzt und dabei die Form der Führungsbahn das Maß und die Charakteristik der Hebebewegung bestimmt.

Bevorzugt ist dabei die Führungsbahn als Verzahnung ausgebildet, mit welcher das als Zahnrad ausgebildete Laufrad in kämmendem Eingriff steht. Gegenüber einer Ausbildung, bei der das Laufrad nur reibschlüssig mit der Führungsbahn im Eingriff steht, ist bei dieser Ausgestaltung stets ein zwangsweiser Eingriff der Führungsbahn mit dem Laufrad gewährleistet, so daß vom Gegenstand auf die Antriebsrolle ausgeübte Kippmomente nicht zu einer Verkantung der Antriebsrolle führen können.

Bei den weiter oben genannten Ausführungsformen kann ebenfalls vorteilhafterweise vorgesehen sein, daß die Führungsbahn als Zahnrad ausgebildet ist, mit dem das als Zahnrad ausgebildete Laufrad in kämmendem Eingriff steht. Wie vorstehend erläutert, wird dadurch ein Verkippen der Drehachse der Antriebsrolle bezüglich der Basis auch bei ungleichmäßig auf die beiden axialen Enden der Antriebsrolle einwirkenden Kräften vermieden.

Eine weitere vorteilhafte Ausgestaltung der erfindungsgemäßen Antriebsrolleneinheit sieht vor, daß die aus Antriebsrolle und Elektromotoranordnung bestehende Anordnung eine bezüglich der Rotorwelle exzentrische Massenverteilung aufweist. Durch diese exzentrische Massenverteilung wird beim Einschalten der Antriebsrolleneinheit erreicht, daß ein besonders großes bremsendes Trägheitsmoment der Antriebsrolle und des damit fest verbundenen Stators vorliegt, so daß sich zunächst der Rotor zu drehen beginnt und damit die Hebebewegung der Antriebsrolle aus der unteren Ruhestellung in die obere Arbeitsstellung herbeigeführt wird, ohne daß es einer besonderen Abbremsung der Antriebsrolle bezüglich der Basis bedarf. Eine derartige Ausgestaltung stellt also sicher, daß die Hebebewegung der Antriebsrolleneinheit beim Einschalten auch dann erfolgt, wenn ein zu fördernder Gegenstand noch nicht auf der Antriebsrolle aufliegt und diese abbremst.

Die Erfindung wird im folgenden beispielsweise unter Bezugnahme auf die Zeichnung näher erläutert; es zeigt:
- Fig. 1: einen stark schematisiert dargestellten vertikalen Längsquerschnitt einer ersten Ausführungsform einer Antriebsrolleneinheit;
- Fig. 2: einen vereinfachten Längsquerschnitt einer praktischen Ausführungsform des ersten Ausführungsbeispiels einer Antriebsrolleneinheit gemäß Fig. 1;
- Fig. 3: einen stark schematisiert dargestellten vertikalen Längsquerschnitt einer zweiten Ausführungsform einer Antriebsrolleneinheit;
- Fig. 4: einen stark schematisiert dargestellten vertikalen Längsquerschnitt einer dritten Ausführungsform einer Antriebsrolleneinheit; und
- Fig. 5: eine Seitenansicht der in der Fig. 4 dargestellten dritten Ausführungsform.

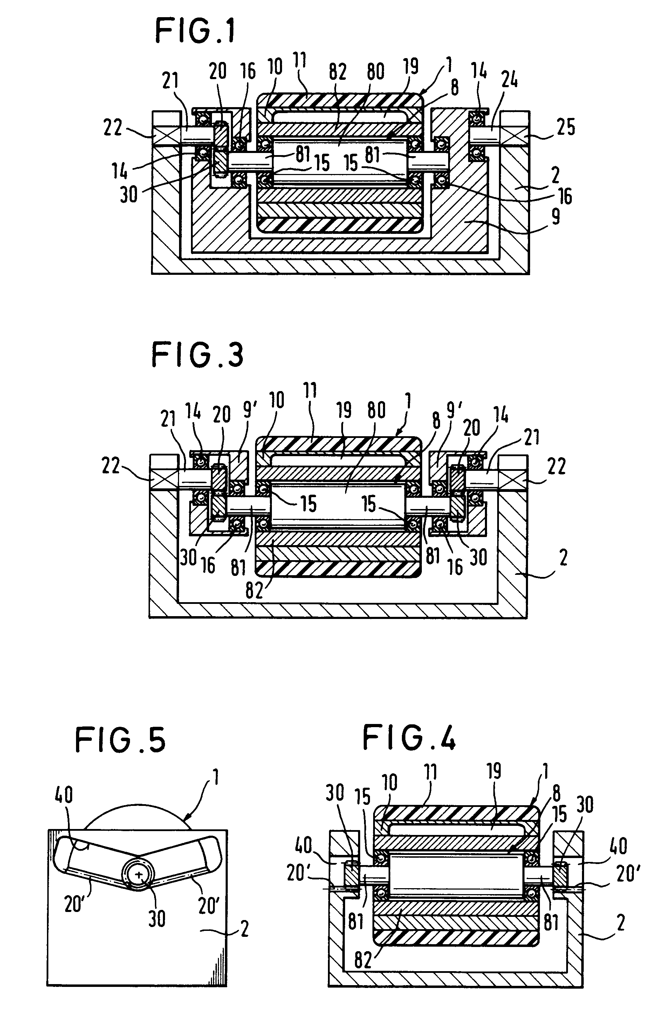

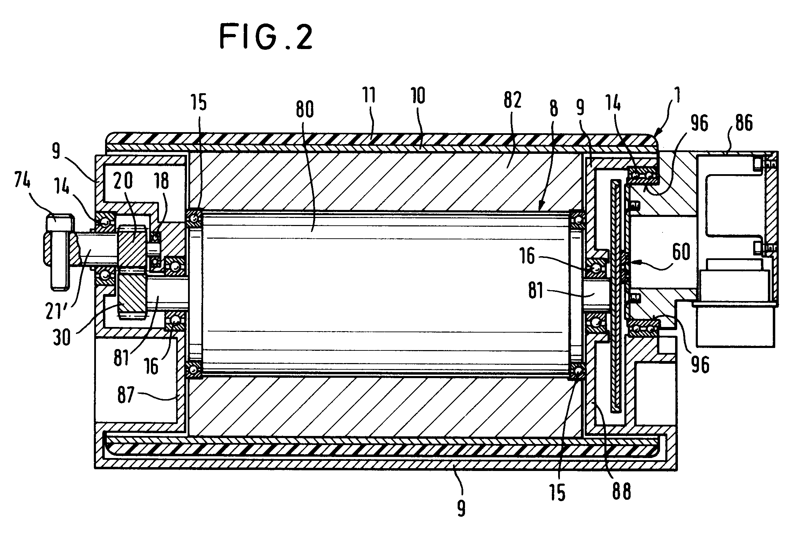

Mit Bezug auf die Fig. 1 werden zunächst der grundsätzliche Aufbau und die Funktionsweise der ersten Ausführungsform einer erfindungsgemäßen Antriebsrolleneinheit erläutert. Die Fig. 1 ist zum Zwecke der Erläuterung und zum besseren Verständnis des Grundprinzips sehr stark vereinfacht und schematisiert dargestellt.

Wie die Fig. 1 zeigt, besteht die Antriebsrolleneinheit grundsätzlich aus einer in etwa als hohler Kreiszylinder ausgebildeten Antriebsrolle 1, in deren Innenraum eine Elektromotoranordnung 8 aufgenommen ist. Die Elektromotoranordnung 8 ist mit einer Führungseinrichtung 20, 30 verbunden, welche von einem bezüglich der Basis 2 drehbar gelagerten Lagergehäuse 9 zusammengehalten ist und zur Aufwärtsbewegung der Antriebsrolle 1 aus der unteren Ruhestellung in die obere Antriebsstellung dient.

Die Antriebsrolle 1 besteht aus einem inneren Rollenkörper 10 und einem diesen Rollenkörper außen umhüllenden Rollenmantel 11, der aus elastischem, abriebfestem Material gefertigt ist, während der Rollenkörper selbst aus starrem Material, beispielsweise Metall geformt ist. In dem in der Fig. 1 oberen Teil des Rollenkörpers 10 ist eine Ausnehmung 19 geformt, die eine exzentrische Massenverteilung der Antriebsrolle 1 bezüglich ihrer Drehachse erzeugt.

Die im Inneren der hohlzylindrischen Antriebsrolle 1 angeordnete Elektromotoranordnung 8 besteht im wesentlichen aus einem Stator 82 und einem innerhalb des Stators 82 mittels der Wälzlager 15 konzentrisch drehbar gelagerten Rotor 80.

Es ist hier anzumerken, daß die Begriffe "Rotor" und "Stator" der Elektromotoranordnung 8 nicht im strengen Wortsinn gebraucht werden, sondern lediglich der Bequemlichkeit halber und zur Erleichterung der Erläuterung der Funktionsweise mit Bezug auf den herkömmlichen und meist gebräuchlichen Aufbau eines Elektromotors. Es wird auf die Erklärung hierzu im Einleitungsteil der vorliegenden Beschreibung verwiesen.

Die Stromversorgung der Elektromotoranordnung 8 bei dieser Ausführungsform erfolgt über den innenliegenden Rotor 80, welcher über eine (in der Zeichnung nicht dargestellte) Kontakt- und Schleifringanordnung mit der Stromversorgung der Basis 2 verbunden ist.

Wesentlich ist, daß die Antriebsrolle 1 über ihren Rollenkörper 10 starr und drehfest mit dem außenliegenden Stator 82 der Elektromotoranordnung verbunden ist und daß der Rotor 80 innerhalb des Stators 82 mittels der Wälzlager 15 drehbar gelagert ist.

Der in der Fig. 1 linke Abschnitt der Rotorwelle 81 des Rotors, der in dem Wälzlager 15 im Stator gelagert ist, trägt an seinem linken Ende ein Laufrad 30, das als Zahnrad ausgebildet ist, welches mit einem als Führungsbahn 20 dienenden weiteren Zahnrad in kämmendem Eingriff steht. Dieses als Führungsbahn 20 dienende weitere Zahnrad ist starr und drehfest auf einem Lagerzapfen 21 befestigt, der über einen Vierkantansatz 22 starr und drehfest mit der Basis 2 verbunden ist.

Der kämmende Eingriff des Laufrades 30 und der Führungsbahn 20 ist durch ein Lagergehäuse 9 sichergestellt, das diese beiden Zahnräder umgibt und einerseits auf dem Lagerzapfen 21 und andererseits auf der Rotorwelle 81 des Rotors 80 der Elektromotoranordnung 8 drehbar gelagert ist. Dieses Lagergehäuse ist im unteren Teil der Basis 2 im Abstand um die Antriebsrolle herum nach rechts in der Fig. 2 fortgesetzt und besitzt im rechten Teil eine Art Lagerflansch, in dem einerseits der rechte Abschnitt der Rotorwelle 81 mittels eines Wälzlagers 16 gelagert ist und exzentrisch hierzu ein Lagerzapfen 24 über ein Wälzlager 14, der mittels eines Vierkants 25 starr und drehfest mit der Basis 2 verbunden ist. Bei dieser Anordnung ist also das Lagergehäuse einerseits drehbar auf der Rotorwelle 81 gelagert und andererseits exzentrisch hierzu um die Lagerzapfen 21 und 24, wobei der Lagerzapfen 21 konzentrisch mit der als Zanhrad ausgebildeten Führungsbahn 20 ausgebildet ist, mit welcher das Laufrad 30 kämmt.

Die Fig. 1 zeigt die Ruhestellung der Antriebsrolle 1 im abgesenkten Zustand, in dem sie außer Eingriff mit einem auf der zugehörigen Rollenförderbahn ruhenden, zu fördernden Gegenstand (nicht gezeigt) sein kann.

Wenn nun ausgehend von diesem Ruhezustand die Stromzufuhr zur Elektromotoranordnung 8 eingeschaltet wird, wirkt zwischen dem Rotor 80 und dem Stator 82 wie bei jedem anderen Elektromotor ein Drehmoment. Da der Stator 82 und die mit ihm fest verbundene Antriebsrolle 1 ein größeres Trägheitsmoment haben als die übrigen Teile, und zudem die Antriebsrolle 1 durch ihre Ausnehmung 19 eine sie gegen Drehung aus der Ruhestellung bremsende exzentrische Massenverteilung besitzt, beginnt zunächst der innenliegende Rotor 80 sich zu drehen, der dabei das Laufrad 30 drehend antreibt. Dieses Laufrad steht in kämmendem Eingriff mit der als Zahnrad ausgebildeten Führungsbahn 20 und wälzt sich daher aufgrund seiner Drehbewegung auf dieser Führungsbahn ab, bewegt sich dabei nach oben und nimmt die Anordnung aus Antriebsrolle 1 und Elektromotoranordnung 8 bei dieser Abwälzbewegung von unten aus der unteren Ruhestellung mit nach oben in die obere Antriebsstellung, bis die Antriebsrolle 1 an der Unterseite eines zu fördernden Gegenstandes anstößt und angepreßt wird. Wegen des Gewichts dieses Gegenstands wird die Weiterbewegung der Antriebsrolle 1 und damit auch die Abwälzbewegung des Laufrades 30 blockiert. Das Laufrad 30 kann sich also nicht mehr drehen und somit auch nicht der mit ihm drehfest gekoppelte Rotor 80 der Elektromotoranordnung 82. Da jedoch das Drehmoment in der Elektromotoranordnung 8 weiter wirkt, muß sich nun zwangsläufig der Stator 82 zu drehen beginnen, der bei dieser Drehung die mit ihm fest verbundene Antriebsrolle 1 mitnimmt und sie in Drehung versetzt. Diese Drehung der Antriebsrolle 1, die gegen die Unterseite des zu fördernden Gegenstands angepreßt ist, übt eine Tangentialkraft auf diesen Gegenstand aus, so daß sich dieser, wie gewünscht, in Bewegung setzt.

Bei der vorstehend beschriebenen Betriebsweise ist angenommen, daß zunächst beim Einschalten der Antriebsrolleneinheit kein Gegenstand auf der Antriebsrolle aufliegt und daß dennoch in diesem Zustand gewünscht ist, daß sich die Antriebsrolle in ihre Arbeitsstellung anhebt. Es ist daher, um die Eigenträgheit der Antriebsrolle gegen den Beginn ihrer Drehbewegung zu unterstützen, durch die Ausnehmung 19 eine asymmetrische, die Antriebsrolle 1 in ihrer Ruhestellung haltende Massenverteilung der Anordnung aus Antriebsrolle 1 und Stator 82 vorgesehen. Alternativ hierzu könnte die Ausnehmung 19 weggelassen werden und stattdessen die Antriebsrolle 1 mittels einer Bremse gegenüber der Basis 2 abgebremst werden.

In den meisten Anwendungsfällen ist freilich weder eine asymmetrische Massenverteilung noch eine besondere Bremse erforderlich, da häufig beim Einschalten der Antriebsrolleneinheit bereits ein zu fördernder Gegenstand auf ihr aufliegt und die Antriebsrolle gegen eine anfängliche Drehung beim Einschalten derart abbremst, daß sie aus ihrer unteren Ruhestellung nach oben gepreßt wird. Der Bewegungshub bei dieser Schwenkbewegung aus der Ruhestellung in die Arbeitsstellung ist dann zwar sehr gering, doch wird das gewünschte Ergebnis erzielt, nämlich daß die Antriebsrolle gegen den Boden des zu fördernden Gegenstands von unten nach oben angepreßt wird.

Wenn nun ausgehend von dem erreichten Antriebs-Betriebszustand die Stromzuführung zur Elektromotoranordnung 8 abgeschaltet wird, kommt der Stator 82 der Elektromotoranordnung 8 bezüglich des (inzwischen stillstehenden) Rotors ebenfalls zum Stillstand, so daß das das Laufrad 30 durch den Rotor 80 auf der Führungsbahn 20 nach oben drückende Drehmoment wegfällt und das Laufrad 30 sich entlang der Führungsbahn 20 abwälzend wieder nach unten in die in der Fig. 1 gezeigte Ruhestellung bewegt. Die Antriebsrolle 1 wird dabei zusammen mit der Elektromotoranordnung 1 mitmitgenommen, so daß der Eingriff der Antriebsrolle 1 mit der Unterseite des zu fördernden Gegenstands gelöst wird oder zumindest der Anpreßdruck gegen den Boden verschwindet.

Nachstehend wird nun mit Bezug auf die Fig. 2 eine in vielen Einzelheiten vereinfacht dargestellte praktische Ausführungsform des vorstehend im Prinzip erläuterten ersten Ausführungsbeispiels der erfindungsgemäßen Antriebsrolleneinheit beschrieben. Für funktionsmäßig gleiche Teile werden dabei die gleichen Bezugszeichen verwendet, während hervorzuhebende Unterschiede bei den funktionsmäßig gleichen Bestandteilen durch ein Apostroph des Bezugszeichens gekennzeichnet sind.

Wie in der Fig. 2 gezeigt ist, umfaßt diese praktische Ausführungsform wiederum eine äußere, etwa hohlzylindrische Antriebsrolle 1, die aus einem äußeren Rollenmantel 11 und einem inneren Rollenkörper 10 besteht. Im Innenraum dieser Antriebsrolle 1 ist die Elektromotoranordnung 8 aufgenommen, deren Stator 82 starr und drehfest mit dem Rollenkörper 10 der Antriebsrolle 1 verbunden ist. Im Inneren des Stators 82 und konzentrisch zur Außenumfangsfläche der Antriebsrolle 1 ist der Rotor 80 mittels der Wälzlager 15 an beiden axialen Enden drehbar gelagert.

Das in der Fig. 1 linke axiale Ende der Rotorwelle 81 des Rotors 80 trägt das Laufrad 30, welches in kämmendem Eingriff mit der als Zahnrad ausgebildeten Führungsbahn 20 steht. Das Zahnrad 20 ist starr und drehfest mit einem Lagerzapfen 21′ verbunden, der mittels eines Bolzens 74 starr und drehfest mit der Basis gekoppelt werden kann.

Der kämmende Eingriff des Laufrades 30 auf der als Zahnrad ausgebildeten Führungsbahn 20 wird durch ein diese Teile zusammenhaltendes Lagergehäuse 9 gewährleistet, das die Führungsbahn 20, das Laufrad 30 und das linke Ende der Rotorwelle 81 nach Art eines Hohlkörpers umschließt. Dieses Lagergehäuse 9 ist mittels des Wälzlagers 14 auf dem Lagerzapfen 21′ gelagert und andererseits mittels des Wälzlagers 16 auf dem linken Abschnitt der Rotorwelle 81. Um Kippmomente zwischen der Führungsbahn 20 und dem Laufrad 30 aufzufangen, ist der die Führungsbahn 20 tragende Lagerzapfen 21′ mit seinem rechten freien Ende, rechts von der Führungsbahn 20 gelegen, zusätzlich über ein Entlastungslager 18 im Lagergehäuse 9 gelagert, das in diesem eben beschriebenen Bereich eine Art radialen Lagerflansch 87 darstellt. Dieser radiale Lagerflansch am in der Fig. 2 linken axialen Ende der Anordnung setzt sich als Lagergehäuse 9 nach unten im Abstand um die Antriebsrolle 1 herum fort, und zwar bis zum rechten axialen Teil der Fig. 2. In diesem Teil setzt sich das die Antriebsrolle 1 axial umgreifende Lagergehäuse 9 wiederum nach oben als radialer Lagerflansch 88 fort. In diesem Bereich des Lagergehäuses 9 ist der rechte Abschnitt der Rotorwelle 81 mittels eines weiteren Wälzlagers 16 drehbar gelagert. Der Lagerflansch 88 des Lagergehäuses 9 ist überdies mit einem Wälzlager 14 auf einer Lagerschulter 96 drehbar gelagert, die konzentrisch zum Lagerzapfen 21′ der Führungsbahn 20 angeordnet und auf einem Anschlußgehäuse 86 geformt ist. Dieses Anschlußgehäuse 86 ist im Betrieb starr und drehfest mit der Basis verbunden und erfüllt bezüglich der Lagerung des Lagerkörpers 9 die gleiche Funktion wie der Lagerzapfen 24 der schematischen Darstellung der Fig. 1.

Dieses Anschlußgehäuse 86 ist als Hohlkörper ausgebildet, der einerseits zur Befestigung an der Basis dient, wie erwähnt, und andererseits zur Stromzuführung zur Elektromotoranordnung 8. Im Inneren dieses Hohlkörpers können verschiedene Komponenten aufgenommen sein, wie beispielsweise ein Thermoschutzschalter, ein Anschlußstecker zur Stromverbindung mit der Basis und Anschlußleitungen für eine Kontaktanordnung 60 aus Schleifringen und Schleifkontakten, die der Stromzuführung zu den bezüglich der Basis bewegbaren Teilen der Elektromotoranordnung dienen. Eine derartige Kontaktanordnung 60 ist dem Fachmann nach dem Stand der Technik wohlbekannt und bedarf daher keiner näheren Erläuterung.

Die Funktionsweise der soeben beschriebenen praktischen Ausführungsform entspricht identisch der ausführlich mit Bezug auf die schematische Darstellung der Fig. 1 erläuterten Betriebsweise. Es ist lediglich anzumerken, daß bei der Ausführung der Fig. 2 eine Darstellung der exzentrischen Massenverteilung der Antriebsrolle 1 und des damit verbundenen Stators 82 weggelassen wurde, da diese exzentrische Massenverteilung einerseits nicht zwingend erforderlich ist und andererseits für den Fachmann auch kein Bedarf für eine Erläuterung besteht, wie eine derartige Massenverteilung zu erreichen ist.

In der Fig. 3 ist sehr vereinfacht und schematisch dargestellt eine zweite Ausführungsform einer erfindungsgemäßen Rollenantriebseinheit gezeigt. In dieser Fig. 3 sind wiederum für Teile die funktionsmäßig Teilen der Fig. 1 und 2 entsprechen, gleiche Bezugszeichen verwendet, wobei Unterschiede durch ein Apostroph am Bezugszeichen Berücksichtigung finden.

Die in der Fig. 3 dargestellte zweite Ausführungsform beruht auf dem gleichen erfindungsgemäßen Prinzip wie die Ausführungsform der Fig. 1 und 2. Auch gemäß der Fig. 3 umfaßt die Antriebsrolleneinheit eine hohlzylindrische Antriebsrolle 1, in deren Innerem die Elektromotoranordnung 8 aufgenommen ist, wobei der Stator 82 der Elektromotoranordnung 8 starr und drehfest mit der Antriebsrolle 1 verbunden ist, während der im Inneren des Stators 82 angeordnete Rotor 80 drehbar im Stator 82 gelagert ist.

Abweichend von der Ausführungsform der Fig. 1 und 2 ist jedoch hier auf beiden axialen Enden der Rotorwelle 81 jeweils ein Laufrad 30 drehfest und starr angebracht, wobei jedes dieser Laufräder 30 jeweils mit einer als Zahnrad ausgebildeten Führungsbahn 20 in kämmendem Eingriff steht. Die Führungsbahn 20 ist mittels der Lagerzapfen 21 jeweils starr und drehfest an der Basis 2 montiert.

Jede zusammengehörige Anordnung aus Führungsbahn 20 und Laufrad 30, die jeweils eine Führungseinrichtung 20, 30 bildet, ist von einem Lagergehäuse 9′ zusammengehalten, das jeweils als Hohlkörper ausgebildet und sowohl auf dem Lagerzapfen 21 als auch auf dem zugeordneten Ende der Rotorwelle 81 drehbar gelagert ist. Die beiden Lagergehäuse 9′ auf den beiden Seiten der Antriebsrolle können entweder getrennt voneinander ausgebildet sein oder aber starr über eine die Antriebsrolle 1 im Abstand umgreifende Brücke (nicht dargestellt) verbunden sein.

Da die Funktionsweise der Ausführungsform der Fig. 1 völlig identisch mit derjenigen der Fig. 1 ist, wird auf eine Wiederholung verzichtet und auf die Erläuterung zur Fig. 1 verwiesen.

Die in den Fig. 4 und 5 dargestellte dritte Ausführungsform beruht ebenfalls auf dem gleichen erfindungsgemäßen Funktionsprinzip wie die Ausführungsformen der Fig. 1 bis 3. Die dritte Ausführungsform der Fig. 4 und 5 unterscheidet sich jedoch von den anderen Ausführungsformen insbesondere in der Ausgestaltung der Führungsbahn 20′, die es zuläßt, daß das Lagergehäuse der beiden ersten Ausführungsformen weggelassen werden kann. Bei der dritten Ausführungsform ergibt sich ein Minimum an Bauteilen.

Wie in den Fig. 4 und 5 gezeigt ist, umfaßt die dritte Ausführungsform also wiederum eine etwa hohlzylindrische Antriebsrolle 1, in deren Innerem eine Elektromotoranordnung 8 aufgenommen ist. Der Stator 82 der Elektromotoranordnung ist starr und drehfest mit der Antriebsrolle 1 verbunden, während der im Inneren des Stators angeordnete Rotor 80 drehbar gelagert ist.

Wie bei der zweiten Ausführungsform gemäß Fig. 3 tragen die beiden axialen Enden der Rotorwelle 81 jeweils ein starr und drehfest mit ihnen verbundenes Laufrad 30, das jeweils in kämmendem Eingriff mit einer Führungsbahn 20′ steht.

Die Führungsbahn 20′ ist in einer Ausnehmung 40 eines vertikalen Teils der Basis 2 geformt oder in einem besonderen, passend geformten Bauteil, das fest mit der Basis 2 verbunden ist.

Wie insbesondere in der Fig. 5 dargestellt ist, ist die Führungsbahn 20′ als etwa V-förmige Verzahnung oder Zahnschiene in der unteren Innenfläche der Ausnehmung 40 geformt, wobei das zugeordnete Laufrad 30 mit dieser Verzahnung kämmt.

Wie vorstehend mit Bezug auf die Fig. 1 erläutert, wälzt sich zunächst beim Einschalten der Elektromotoranordnung das Laufrad 30 auf der Verzahnung ab, und da es in der Mittelstellung im untersten Bereich, nämlich im Scheitel der V-förmigen Zahnschiene ruht, muß es bei dieser Abwälzbewegung entlang eines der nach oben führenden Schenkel der V-förmigen Führungsbahn 20′ bezüglich der Basis aufwärts wandern. Dadurch wird wie bei den ersten beiden Ausführungsformen die Antriebsrolle 1 aus ihrer unteren Ruhestellung in ihre obere Antriebsstellung gebracht und an den Boden des zu fördernden Gegenstands angepreßt.

Die Führungsbahn 20′ muß nicht notwendigerweise V-förmig gestaltet sein, es ist lediglich notwendig, daß sie ausgehend vom Bereich der Ruhestellung des Laufrades 30 bezüglich der Basis nach oben führt. Beispielsweise kann also die Führungsbahn 20′ auch U-förmig gestaltet sein oder in auf andere Weise gekrümmter Art, wodurch sich bestimmte Charakteristiken der Hebebewegung der Antriebsrolle aus der unteren Ruhestellung in die obere Antriebsstellung erzielen lassen, wenn dies im Einzelfall erwünscht ist.

## Patentansprüche

1. Antriebsrolleneinheit zum Antrieb von Gegenständen auf einer Förderbahn mit einer von einer Elektromotoranordnung (8) drehend antreibbaren Antriebsrolle (1), welche mittels einer Führungseinrichtung (20, 30) bezüglich einer Basis (2) zwischen einer unteren Ruhestellung und einer oberen Antriebsstellung, in der sie mit der Unterseite des anzutreibenden Gegenstands im Eingriff steht, bewegbar ist, wobei die Antriebsrolle (1) im wesentlichen als hohler Kreiszylinder ausgebildet ist, in dessen Innenraum die Elektromotoranordnung (8) angeordnet ist, und wobei der Rotor (80) drehbar innerhalb des Stators (82) der Elektromotoranordnung (8) gelagert ist, dadurch **gekennzeichnet,** daß die Antriebsrolle (1) konzentrisch zur Drehachse des Rotors (80) starr und drehfest mit dem Stator (82) verbunden ist, daß an wenigstens einem axialen Ende der Rotorwelle (81) des Rotors (80) starr und drehfest ein Laufrad (30) angebracht ist und daß das Laufrad (30) im Eingriff mit einer fest mit der Basis (2) verbundenen, bezüglich der Basis (2) aufwärts führenden Führungsbahn (20, 20′) steht, die zusammen mit dem Laufrad (30) die Führungseinrichtung (20, 30) bildet, wobei sich das Laufrad (30) bei der Bewegung der Antriebsrolle (1) von der unteren Ruhestellung in die obere Antriebsstellung auf der Führungsbahn (20, 20′) abwälzt.

2. Antriebsrolleneinheit nach Anspruch 1, dadurch **gekennzeichnet,** daß die Führungsbahn (20) als starr und drehfest mit der Basis (2) verbundenes Führungsrad ausgebildet ist, auf dem sich das Laufrad (30) abwälzt, daß dieses Führungsrad (20) und das Laufrad (30) durch ein Lagergehäuse (9, 9′) im Eingriff miteinander gehalten sind, und daß das Lagergehäuse (9, 9′) um eine zum Führungsrad konzentrische Drehachse bezüglich der Basis (2) drehbar gelagert ist. (Fig. 1 bis Fig. 3)

3. Antriebsrolleneinheit nach Anspruch 2, dadurch **gekennzeichnet,** daß das Lagergehäuse (9, 9′) auf der Rotorwelle (81) und auf einem fest mit der Basis (2) verbundenen, das Führungsrad tragenden Lagerzapfen (21, 21′) drehbar gelagert ist. (Fig. 1 bis Fig. 3)

4. Antriebsrolleneinheit nach einem der Ansprüche 1 bis 3, dadurch **gekennzeichnet,** daß an beiden axialen Enden der Rotorwelle (81) ein sich auf einer zugeordneten Führungsbahn (20, 20′) abwälzendes Laufrad (30) angebracht ist. (Fig. 3 bis Fig. 5)

5. Antriebsrolleneinheit nach Anspruch 2 oder 3, dadurch **gekennzeichnet,** daß nur an einem axialen Ende der Rotorwelle (81) ein Laufrad (30) angebracht ist, und daß das Lagergehäuse (9) an dem entgegengesetzten axialen Ende der Rotorwelle (81) einerseits auf diesem Ende der Rotorwelle (81) und andererseits auf einem fest mit der Basis (2) verbundenen, zum Lagerzapfen (21) des Führungsrads (20) konzentrischen Lageransatz (24, 96) drehbar gelagert ist. (Fig. 1, Fig. 2)

6. Antriebsrolleneinheit nach einem der Ansprüche 2 bis 5, dadurch **gekennzeichnet,** daß das auf den beiden Enden der Rotorwelle (81) gelagerte Lagergehäuse (9) einstückig oder aus fest miteinander verbundenen Teilen aufgebaut ist. (Fig. 1 und Fig. 2)

7. Antriebsrolleneinheit nach Anspruch 1, dadurch **gekennzeichnet,** daß an beiden axialen Enden der Rotorwelle (81) ein sich auf einer zugeordneten Führungsbahn (20, 20′) abwälzendes Laufrad (30) angebracht ist, und daß die Führungsbahn (20′) als etwas V-förmige oder U-förmige Laufbahn ausgebildet ist, die in einer Ausnehmung (40) der Basis (2) geformt oder fest an der Basis (2) angebracht ist. (Fig. 4 und Fig. 5)

8. Antriebsrolleneinheit nach einem der vorhergehenden Ansprüche, dadurch **gekennzeichnet,** daß die Führungsbahn (20, 21) als Verzahnung ausgebildet ist, mit welcher das als Zahnrad ausgebildete Laufrad (30) in kämmendem Eingriff steht.

9. Antriebsrolleneinheit nach einem der Ansprüche 1 bis 6, dadurch **gekennzeichnet,** daß die Führungsbahn (20) als Zahnrad ausgebildet ist, mit dem das als Zahnrad ausgebildete Laufrad (30) in kämmendem Eingriff steht.

10. Antriebsrolleneinheit nach einem der vorhergehenden Ansprüche, dadurch **gekennzeichnet,** daß die aus Antriebsrolle (1) und Elektromotoranordnung (8) bestehende Anordnung eine bezüglich der Rotorwelle (81) exzentrische Massenverteilung aufweist.

## Claims

1. A drive roller unit for driving articles on a conveyor track comprising a drive roller (1) which can be driven in rotation by an electric motor means (8), said drive roller, by way of a guide means (20, 30), being movable relative to a base (2) between a lower rest position and an upper drive position in which said drive roller is in engagement with the underside of an article to be driven, wherein the drive roller (1) is substantially in the form of a hollow circular cylinder, in the interior of which the electric motor means (8) is arranged, and wherein the rotor (80) is mounted rotatably within the stator (82) of said electric motor means (8), characterized in that the drive roller (1) is rigidly and non-rotatably connected to the stator (82) in concentric relationship with the axis of rotation of the rotor (80), that on at least one axial end of the rotor shaft (81) of said rotor (80) a runner wheel (30) is rigidly and non-rotatably mounted, and that said runner wheel (30) is in engagement with a guide track (20, 20') which is fixedly connected to said base (2) and extends upwardly with respect to said base (2), said guide track together with said running wheel (30) forming said guide means (20, 30), whereby said runner wheel (30) upon movement of said drive roller (1) rolls on said guide track (20, 20') from said lower rest position towards said upper drive position.

2. A drive roller unit according to claim 1, characterized in that the guide track (20) is in the form of a guide wheel which is rigidly and non-rotatably connected to the base (20) and on which said runner wheel (30) rolls, that said guide wheel (20) and said runner wheel (30) are hold in engagement with each other by a mounting housing (9, 9'), and that said mounting housing (9, 9') is mounted rotatably relative to the base (2) about an axis of rotation which is concentric with respect to the guide wheel. (Fig. 1 to Fig. 3)

3. A drive roller unit according to claim 2, characterized in that said mounting housing (9, 9') is mounted rotatably on said rotor shaft (81) and on a trunnion (21, 21') which is fixedly connected to the base (2) and which carries the guide wheel. (Fig. 1 to Fig. 3)

4. A drive roller unit according to any of claims 1 to 3, characterized in that on both axial ends of the rotor shaft (81) is disposed a respective runner wheel (30) which rolls against an associated guide track (20, 20'). (Fig. 3 to Fig. 5)

5. A drive roller unit according to claim 2 or 3, characterized in that only at one axial end of the rotor shaft (81) a runner wheel (30) is disposed and that the mounting housing (9) is rotatably mounted at the opposite axial end of the rotor shaft (81), on the one hand on that end of the rotor shaft (81) and on the other hand on a mounting projection (24, 96) which is fixedly connected to the base (2) and which is concentric with respect to the trunnion (21) of said guide wheel (20). (Fig. 1, Fig. 2)

6. A drive roller unit according to any of claims 2 to 5, characterized in that the mounting housing (9) which is mounted on the two ends of the rotor shaft (81) is of an integral construction or is made from components which are fixedly connected together. (Fig. 1 and Fig. 2)

7. A drive roller unit according to claim 1, characterized in that a runner wheel (30) which rolls on an associated guide track (20, 20') is disposed at each of the two axial ends of the rotor shaft (81), and that the guide track (20') is in the form of a substantially V-shaped or U-shaped roller track which is formed in a recess (40) in the base (2) or is fixedly mounted to the base (2). (Fig. 4 and Fig. 5)

8. A drive roller unit according to any preceding claim, characterized in that said guide track (20, 21) is in the form of a tooth arrangement with which the runner wheel (30), being in the form of a toothed wheel, is in meshing engagement.

9. A drive roller unit according to any of claims 1 to 6, characterized in that said guide track (20) is in the form of a toothed wheel with which the runner wheel (30), being in the form of a toothed wheel, is in meshing engagement.

10. A drive roller unit according to any preceding claim, characterized in that the assembly consisting of the drive roller (1) and the electric motor means (8) has a distribution of mass which is excentric with respect to the rotor shaft (81).

## Revendications

1. Unité de rouleau d'entraînement pour l'entraînement d'objets sur un chemin de transport, comportant un rouleau d'entraînement (1) qui peut être entraîné en rotation par un dispositif à moteur électrique (8) et qui est déplaçable au moyen d'un dispositif de guidage (20,30) par rapport à une base (2) entre une position inférieure de repos et une position supérieure d'entraînement, dans laquelle il reste en engagement avec le côté inférieur de l'objet à entraîner, et dans laquelle le rouleau d'entraînement (1) est réalisé essentiellement sous la forme d'un cylindre circulaire creux, à l'intérieur duquel est disposé le dispositif à moteur électrique (8), et le rotor (80) est logé de manière à pouvoir tourner à l'intérieur du stator (82) du dispositif à moteur électrique (8), caractérisée en ce que le rouleau d'entraînement (1) est raccordé rigidement et avec blocage en rotation avec le stator (82), concentriquement à l'axe de rotation du rotor (80), qu'une roue mobile (30) est raccordée d'une manière rigide et avec blocage en rotation à au moins une extrémité axiale de l'arbre (81) du rotor (80) et que la roue mobile (30) reste en engagement avec un chemin de guidage (20,20'), qui est raccordée rigidement à la base (2) et qui réalise un guidage ascendant par rapport à la base (2) et forme, avec la roue mobile (30), le dispositif de guidage (20,30), la roue mobile (30) roulant sur le chemin de guidage (20,20') lors du mouvement du rouleau d'entraînement (1) de la position inférieure de repos dans la position supérieure d'entraînement.

2. Unité de rouleau d'entraînement selon la revendication 1, caractérisée en ce que le chemin de guidage (20) est réalisé sous la forme d'une roue de guidage, qui est raccordée rigidement et avec blocage en rotation avec la base (2) et sur laquelle roule la roue mobile (30), que cette roue de guidage (20) et la roue mobile (30) sont maintenues en engagement réciproque au moyen d'une enveloppe de paliers (9,9') et que l'enveloppe de paliers (9,9') est montée de manière à pouvoir tourner par rapport à la base (2) autour d'un axe de rotation concentrique à la roue de guidage. (Figure 1 à figure 3).

3. Unité de rouleau d'entraînement selon la revendication 2, caractérisée en ce que l'enveloppe de paliers (9,9') est montée de manière à pouvoir tourner sur l'arbre (81) du rotor et sur un tourillon (21,21'), qui est raccordé de façon fixe à la base (2) et porte la roue de guidage. (Figure 1 à figure 3).

4. Unité de rouleau d'entraînement selon l'une des revendications 1 à 3, caractérisée en ce qu'une roue mobile (30), qui roule sur un chemin associé de guidage (20,20') est montée aux deux extrémités axiales de l'arbre de rotor (81). (Figure 3 à figure 5).

5. Unité de rouleau d'entraînement selon la revendication 2 ou 3, caractérisée en ce qu'une roue mobile (30) est montée uniquement à une extrémité axiale de l'arbre (81) du rotor et que l'enveloppe de paliers (9) est montée de manière à pouvoir tourner d'une part à l'extrémité axiale opposée de l'arbre (81) du rotor et d'autre part sur un élément saillant de palier (24,96) qui est raccordé fixe avec la base (2) et est concentrique au tourillon (21) de la roue de guidage (20). (Figure 1, figure 2).

6. Unité de rouleau d'entraînement selon l'une des revendications 2 à 5, caractérisée en ce que l'enveloppe de paliers (9) montée sur les deux extrémités de l'arbre (81) du rotor est constituée d'un seul tenant ou est constituée par des parties réunies entre elles fixement. (Figure 1, figure 2).

7. Unité de rouleau d'entraînement selon la revendication 1, caractérisée en ce qu'une roue mobile (30), qui roule sur un chemin associé de guidage (20,20'), est montée aux deux extrémités axiales de l'arbre (81) du rotor, et que le chemin de guidage (20') est agencé sous la forme d'un chemin de roulement par exemple en forme de V ou de U, qui est formée dans un évidement (40) de la base (2) ou est montée fixe à la base (2). (Figure 4 et figure 5).

8. Unité de rouleau d'entraînement selon l'une des revendications précédentes, caractérisée en ce que le chemin de guidage (20,21) est réalisé sous la forme d'une denture, avec laquelle engrène la roue mobile (30) réalisée sous la forme d'une roue dentée.

9. Unité de rouleau d'entraînement selon l'une des revendications 1 à 6, caractérisée en ce que le chemin de guidage (20) est réalisé sous la forme d'une roue dentée, avec laquelle engrène la roue mobile (30) réalisée sous la forme d'une roue dentée.

10. Unité de rouleau d'entraînement selon l'une des revendications précédentes, caractérisée en ce que le dispositif constitué par le rouleau d'entraînement (1) et le dispositif à moteur électrique (8) présente une répartition de masse excentrée par rapport à l'arbre (81) du rotor.
